(19) Europäisches Patentamt
European Patent Office
Office européen des brevets

(11) **EP 3 258 552 B1**

(12) **EUROPÄISCHE PATENTSCHRIFT**

(45) Veröffentlichungstag und Bekanntmachung des Hinweises auf die Patenterteilung:
**12.08.2020 Patentblatt 2020/33**

(21) Anmeldenummer: **17176006.9**

(22) Anmeldetag: **14.06.2017**

(51) Int Cl.:
*H01R 43/20* (2006.01)   *B23P 21/00* (2006.01)
*H01H 11/00* (2006.01)   *B23Q 7/03* (2006.01)
*H05K 13/04* (2006.01)   *H01R 13/24* (2006.01)
*H01R 43/16* (2006.01)

(54) **VORRICHTUNG ZUR HERSTELLUNG EINES BAUTEILS AUS WENIGSTENS ZWEI BAUTEILKOMPONENTEN IN SERIENFERTIGUNG**

DEVICE FOR PRODUCING A COMPONENT FROM AT LEAST TWO COMPONENTS IN MASS PRODUCTION

DISPOSITIF DE FABRICATION D'UN COMPOSANT À PARTIR D'AU MOINS DEUX COMPOSANTS FABRIQUÉS EN SÉRIE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **17.06.2016 DE 102016210877**

(43) Veröffentlichungstag der Anmeldung:
**20.12.2017 Patentblatt 2017/51**

(73) Patentinhaber: **Otto Bihler Handels-Beteiligungs-GmbH 87642 Halblech (DE)**

(72) Erfinder: **Bihler, Mathias 87642 Halblech (DE)**

(74) Vertreter: **Weickmann & Weickmann PartmbB Postfach 860 820 81635 München (DE)**

(56) Entgegenhaltungen:
DE-A1- 2 801 115    US-A- 3 561 114
US-A- 4 868 977    US-A- 5 008 999

EP 3 258 552 B1

**Beschreibung**

Die Erfindung betrifft eine Vorrichtung mit den Merkmalen des Oberbegriffs von Anspruch 1 oder den Merkmalen des Oberbegriffs von Anspruch 2 zur Herstellung von Bauteilen aus jeweils wenigstens zwei Bauteilkomponenten in Serienfertigung.

Es sind Vorrichtungen zur Herstellung eines Bauteils aus Bauteilkomponenten in Serienfertigung in diversen Varianten bekannt, welche eine Montagevorrichtung zum Zusammenfügen von ersten Bauteilkomponenten und zweiten Bauteilkomponenten umfassen und ferner Transporteinrichtungen zum Zuführen der ersten Bauteilkomponente und der zweiten Bauteilkomponente zu der Montagevorrichtung aufweisen. Das Zuführen der Bauteilkomponenten erfolgt üblicherweise in einem Transporttakt oder Maschinentakt, so dass jeweils eine erste Bauteilkomponente auf einem Werkstückträger zur Montagevorrichtung bewegt wird und dort im Wesentlichen synchron die zugeordnete zweite Bauteilkomponente ankommt, so dass im entsprechenden Maschinentakt die zweite Bauteilkomponente mit der ersten Bauteilkomponente mittels der Montagevorrichtung verbunden werden kann. Nach Verbinden einer zweiten Bauteilkomponente mit einer zugeordneten ersten Bauteilkomponente (oder ggf. auch mit noch weiteren Bauteilkomponenten) wird dieser Bauteilkomponentenverbund mittels der betreffenden Transporteinrichtung aus dem Bereich der Montagevorrichtung abtransportiert, um Platz für nachrückende Bauteilkomponenten zu machen, die miteinander zu verbinden sind. Bei den auf diese Art und Weise herzustellenden Bauteilen handelt es sich oft um Mehrkomponenten-Kleinbauteile, wie z.B. in Isolationsnestern eingebettete elektrische Schaltkontaktelemente oder SMD-Bauteile (surface mounted devices) für elektronische Geräte oder dergleichen. Bei den Bauteilkomponenten kann es sich um Bauteilkomponenten aus unterschiedlichen Materialien oder/und unterschiedlichen Formen oder/und unterschiedlichen Dimensionen handeln. Ein Beispiel könnte ein elektrischer Kontakt in einem Kunststoffhalter sein, wobei der Kunststoffhalter eine erste Bauteilkomponente und der elektrische Kontakt eine zweite Bauteilkomponente im vorstehend erläuterten Sinne darstellen könnte.

Derartige Mehrkomponenten-Kleinbauteile werden oft in großer Stückzahl in Hochgeschwindigkeitsserienfertigung hergestellt, nämlich insbesondere dann, wenn Bedarf nach großen Mengen solcher Bauteile und hoher Kostendruck in Bezug auf deren Herstellung besteht.

Eine gattungsgemäße Vorrichtung mit den Merkmalen des Oberbegriffs von Anspruch 1 und des Oberbegriffs von Anspruch 2 ist aus der US 3 561 114 A bekannt.

Genauer wird in der US 3 561 114 A eine Vorrichtung offenbart, bei der die erste Transporteinrichtung dazu eingerichtet ist, äquidistante Werkstückträgerabschnitte umlaufend entlang einer geschlossenen Endlosstrecke als erster Transportstrecke getaktet intermittierend mit einer gegebenen Schrittweite längs der ersten Transportstrecke zu verschiedenen längs einem linearen Abschnitt der ersten Transportstrecke angeordneten Arbeitsstationen zu bewegen. Diese Arbeitsstationen umfassen insbesondere zwei Montagevorrichtungen, an denen nacheinander beide Seiten einer Spule mit Anschlüssen bestückt werden, so dass jede Spule an beiden Montagevorrichtungen der US 3 561 114 A bearbeitet wird.

Vor diesem Hintergrund besteht die Aufgabe der vorliegenden Erfindung darin, eine Steigerung der Produktivität einer gattungsgemäßen Vorrichtung zur Herstellung von Bauteilen aus jeweils wenigstens zwei Bauteilkomponenten zu ermöglichen, wobei jede einzelne der Montagevorrichtungen die Bauteile herstellt.

Zur Lösung dieser Aufgabe wird gemäß dem ersten Aspekt der Erfindung für den kontinuierlichen Transport eine Vorrichtung mit den Merkmalen von Anspruch 1 vorgeschlagen, gemäß dem zweiten Aspekt der Erfindung für den intermittierenden Transport eine Vorrichtung mit den Merkmalen von Anspruch 2.

Es liegt im Rahmen der Erfindung, dass in unterschiedlichen Anwendungsfällen ersten Bauteilkomponenten unterschiedlich viele zweite Bauteilelemente zur gemeinsamen Verbindung zugeordnet sein können.

Ein Ansatz der Erfindung besteht darin, n Montagevorrichtungen, also wenigstens zwei Montagevorrichtungen, entlang der ersten Transportstrecke zu positionieren, wobei diese Montagevorrichtungen die Aufgabe haben, erste Bauteilkomponenten und zweite Bauteilkomponenten vorzugsweise zeitgleich zu einem jeweiligen Verbund zusammenzufügen, und wobei die Montagevorrichtungen von ein und derselben ersten Transporteinrichtung mit ersten Bauteilkomponenten zeitgleich zu den Bereitstellungszeitpunkten der ersten Transporteinrichtung beliefert werden. Auf diese Weise kann die Anzahl der zu fertigenden Bauteile an einer ersten Transportstrecke erheblich vergrößert und die Maschinenproduktivität vervielfacht werden.

Auch liegt es im Rahmen der Erfindung, dass die erste Transporteinrichtung dazu eingerichtet sein kann, erste Bauteilkomponenten gruppenweise zu den Montagevorrichtungen zu transportieren, so dass zu den Bereitstellungszeitpunkten der ersten Transporteinrichtung eine jeweilige Gruppe aus ersten Bauteilkomponenten an jeder der Montagevorrichtungen zur im Wesentlichen simultanen Bearbeitung und/oder Übernahme durch die Montagevorrichtungen bereitsteht. Die zweite Transporteinrichtung stellt zu den Bereitstellungszeitpunkten der ersten Transporteinrichtung an den Montagevorrichtungen eine jeweilige Anzahl an zweiten Bauteilkomponenten bereit, die dem Bedarf an zweiten Bauteilkomponenten zum Zusammenfügen mit den ersten Bauteilkomponenten an den Montagevorrichtungen jeweils entspricht. Die Montagevorrichtungen sind dann so zu betreiben, dass sie in oder zwischen den Bereitstellungszeitpunkten der ersten Transporteinrichtung gleichzeitig Bauteilkomponenten der jeweiligen Gruppe aus ersten Bauteilkomponenten mit entsprechend zugeordneten zweiten Bauteilkomponenten verbinden können. Auch auf diese Weise kann die Produktivität der Vorrichtung zur Herstellung eines Bauteils aus wenigstens zwei Bauteilkomponenten in Serienfertigung gesteigert werden.

Die erste Transportstrecke ist eine geschlossene Endlosstrecke bzw. Schlaufe, wobei die erste Transporteinrichtung längs der ersten Transportstrecke zumindest näherungsweise äquidistant aufeinanderfolgende Werkstückträgerabschnitte umfasst und dazu eingerichtet ist, diese umlaufend entlang der ersten Transportstrecke zu bewegen, und wobei die Werkstückträgerabschnitte einzeln dazu eingerichtet sind, eine jeweilige erste Bauteilkomponente oder ggf. eine jeweilige Gruppe an ersten Bauteilkomponenten zum Transport aufzunehmen und längs der ersten Transportstrecke entsprechend der Transportbewegung der ersten Transporteinrichtung zu bewegen, wobei zumindest in einem bestimmten Streckenabschnitt der ersten Transportstrecke die Abstände zwischen den Positionen der Montagevorrichtungen längs der ersten Transportstrecke dem Abstand x zwischen gleichartigen Stellen, vorzugsweise den Mitten zweier unmittelbar aufeinander folgender Werkstückträgerabschnitte längs der ersten Transportstrecke oder einem ganzzahligen Vielfachen davon entsprechen, so dass eine auf den Abstand x abgestimmte Vorschubbewegung der Werkstückträgerabschnitte durch die erste Transporteinrichtung gewählt werden kann, um zu jedem Bereitstellungszeitpunkt alle n Montagevorrichtungen mit einer ersten Bauteilkomponente oder ggf. einer Gruppe erster Bauteilkomponenten zu beliefern. Auf diese Weise kann der Transport- und Transportsteuerungsaufwand bei der Zuführung von ersten Bauteilkomponenten zu den Montagevorrichtungen gering gehalten werden.

Bei den Werkstückträgerabschnitten handelt es sich vorzugsweise um Halter, die so ausgeformt sind, dass sie erste Bauteilkomponenten oder ggf. Gruppen von ersten Bauteilkomponenten in einer gewünschten relativen Ausrichtung für den Transport längs der ersten Transportstrecke aufnehmen können, und die äquidistant in Reihe an einem Endlosband angeordnet sind, welches von der ersten Transporteinrichtung umlaufend längs der ersten Transportstrecke bewegt wird, um stets einen jeweiligen Werkstückträgerabschnitt mit einer ersten Bauteilkomponente oder ggf. Gruppe von ersten Bauteilkomponenten zu den Bereitstellungszeitpunkten an den Montagevorrichtungen gleichzeitig bereitzustellen.

Je nach Ausführungsform der Erfindung kann die erste Transporteinrichtung dazu eingerichtet sein, die ersten Bauteilkomponenten bzw. die Werkstückträgerabschnitte kontinuierlich, vorzugsweise mit konstanter Geschwindigkeit, oder diskontinuierlich bzw. getaktet intermittierend zu bewegen. Auch kann eine Vorrichtung nach der Erfindung für den wahlweise kontinuierlichen oder diskontinuierlichen Transportbetrieb der ersten Transporteinrichtung eingerichtet sein.

Gemäß dem ersten Aspekt der Erfindung ist es vorgesehen, dass die erste Transporteinrichtung die Werkstückträgerabschnitte kontinuierlich mit einer Vorschubgeschwindigkeit V längs der ersten Transportstrecke vorschiebt, wobei die Vorschubgeschwindigkeit V und die Abstände (D) zwischen den Positionen der Montagevorrichtungen längs der ersten Transportstrecke so aufeinander abgestimmt sind, dass im Betrieb der ersten Transporteinrichtung - zumindest nach einer Anlaufphase - an allen Montagevorrichtungen zu den Bereitstellungszeitpunkten der ersten Transporteinrichtung ein jeweiliger Werkstückträgerabschnitt bereitsteht, so dass bei einem Umlauf der ersten Transporteinrichtung seriell sämtliche Werkstückträgerabschnitte zu den Bereitstellungszeitpunkten an einer betreffenden Montagevorrichtung bereitgestellt werden, wobei kein Werkstückträgerabschnitt an mehr als einer Montagevorrichtung bereitgestellt wird. Die Montagevorrichtungen sind somit an ausgewählten Positionen längs der ersten Transportstrecke platziert, so dass bei einem vollständigen Umlauf der Werkstückträgerabschnitte längs der als Endlosstrecke gestalteten ersten Transportstrecke und bei entsprechend gewähltem Vorschub bei der Transportbewegung der ersten Transporteinrichtung jeder Werkstückträgerabschnitt nur einmal zur Bereitstellung erster Bauteilkomponenten an einer Montagevorrichtung zu einem betreffenden Bereitstellungszeitpunkt bereitsteht. Zu den übrigen Bereitstellungszeitpunkten befinden sich die Werkstückträgerabschnitte während des Umlaufs außerhalb des Zuordnungsbereiches der Montagevorrichtungen.

Im Falle einer zum kontinuierlichen Transport betriebenen ersten Transporteinrichtung kommen verschiedene Arbeitsweisen der Montagevorrichtungen infrage. So kann es in einem Fall vorgesehen sein, dass die ersten Bauteilkomponenten während des Vorgangs des Zusammenfügens der ersten und zweiten Bauteilkomponenten in ihren jeweiligen Werkstückträgerabschnitten verbleiben und dass die Montagevorrichtungen bei ihren Montagevorgängen des Zusammensetzens der Bauteilkomponenten der Bewegung der Werkstückträgerabschnitte über einen kleinen Streckenabschnitt während eines kurzen Zeitintervalls, welches für den Montagevorgang erforderlich ist, folgen. In einem anderen Fall kann es vorgesehen sein, dass die ersten Bauteilkomponenten zum Zwecke des Zusammenfügens der ersten und zweiten Bauteilkomponenten kurzzeitig und vorübergehend von den Werkstückträgerabschnitten separiert werden, wobei dies alles innerhalb eines kurzen Zeitintervalls, welches für den Montagevorgang erforderlich ist und in welchem der Werkstückträgerabschnitt der betreffenden Montagevorrichtung seit dem letzten Bereitstellungszeitpunkt zugeordnet ist, zu erfolgen hat. Transfermittel müssen in diesem Fall dazu eingerichtet sein, eine betreffende erste Bauteilkomponente zum Bereitstellungszeitpunkt aus ihrem Werkstückträgerabschnitt zu entnehmen und nach Bearbeitung durch die Montagevorrichtung wieder an den Werkstückträgerabschnitt zurückzugeben, nachdem dieser um einen kleinen Streckenabschnitt längs der ersten Transportstrecke weiterbewegt wurde.

Vorzugsweise ist bei einer Ausführungsform der Erfindung die erste Transporteinrichtung in der Weise im kontinuierlichen Modus betreibbar, dass die Bereitstellungszeitpunkte periodisch mit einem Zeitabstand $\Delta t$ aufeinanderfolgen, wobei sie die Werkstückträgerabschnitte längs der ersten Transportstrecke mit einer vorzugsweise konstanten Vorschubgeschwindigkeit V kontinuierlich vorbewegt, die im Wesentlichen dem n-fachen Abstand x zwischen gleichartigen Stellen, vorzugsweise den Mitten zweier aufeinanderfolgender Werkstückträgerabschnitte längs der ersten Transportstrecke dividiert durch den Zeitabstand $\Delta t$ zwischen zwei aufeinanderfolgenden Bereitstellungszeitpunkten entspricht, also:

$$V = nx/ \Delta t.$$

Während des Zeitabstandes $\Delta t$ werden somit Gruppen aus n aufeinander folgenden Werkstückträgerabschnitten (6) um eine Strecke S = n x in Transportrichtung vorbewegt, wobei n die Anzahl an Montagevorrichtungen ist.

Gemäß dem zweiten Aspekt der Erfindung ist die Vorrichtung mit diskontinuierlichem Betrieb der ersten Transporteinrichtung betreibbar.

Dies ermöglicht eine Arbeitsweise der Montagevorrichtungen an ruhenden, in den Werkstückträgerabschnitten verbleibenden ersten Bauteilkomponenten während der Stoppzeiten (Schrittpausen) der intermittierenden Transportbewegung.

Diese Vorrichtung umfasst eine bestimmte Anzahl n (größer als 1) an Montagevorrichtungen zum Zusammenfügen erster Bauteilkomponenten und zweiter Bauteilkomponenten zu Bauteilen, eine erste Transporteinrichtung zum getaktet intermittierenden Transport erster Bauteilkomponenten zu den Montagevorrichtungen längs einer als geschlossene Endlosstrecke gestalteten ersten Transportstrecke, eine zweite Transporteinrichtung zum Transport zweiter Bauteilkomponenten zu den Montagevorrichtungen, wobei die erste Transporteinrichtung dazu eingerichtet ist, im Transporttakt wenigstens eine jeweilige erste Bauteilkomponente zu jeder Montagevorrichtung zu transportieren, so dass in Stoppzeiten der intermittierenden Transportbewegung der ersten Transporteinrichtung jeweils wenigstens eine erste Bauteilkomponente an jeder Montagevorrichtung zur im Wesentlichen simultanen Bearbeitung durch die Montagevorrichtungen bereitsteht, wobei die zweite Transporteinrichtung dazu eingerichtet ist, zu den Stoppzeiten der intermittierenden Transportbewegung der ersten Transporteinrichtung eine jeweilige Anzahl an zweiten Bauteilkomponenten an den Montagevorrichtungen bereitzustellen, die dem Bedarf an zweiten Bauteilkomponenten zum Zusammenfügen mit den ersten Bauteilkomponenten an den Montagevorrichtungen jeweils entspricht.

Die erste Transporteinrichtung dieser Vorrichtung ist gemäß dem zweiten Aspekt der Erfindung dazu eingerichtet, die Werkstückträgerabschnitte getaktet intermittierend mit einer Schrittweite S längs der ersten Transportstrecke vorzubewegen, wobei die Abstände (D) zwischen den Positionen der Montagevorrichtungen längs der ersten Transportstrecke so aufeinander abgestimmt sind, dass im Betrieb der ersten Transporteinrichtung - zumindest nach einer Anlaufphase - an allen Montagevorrichtungen in den den Bereitstellungszeitpunkten der ersten Transporteinrichtung entsprechenden Stoppzeiten der intermittierenden Transportbewegung ein jeweiliger Werkstückträgerabschnitt bereitsteht, so dass bei einem Umlauf der ersten Transporteinrichtung seriell sämtliche Werkstückträgerabschnitte in den Stoppzeiten der intermittierenden Transportbewegung an einer betreffenden Montagevorrichtung bereitgestellt werden, wobei kein Werkstückträgerabschnitt an mehr als einer Montagevorrichtung bereitgestellt wird.

Hierzu ist die erste Transporteinrichtung vorzugsweise dazu eingerichtet, die Werkstückträgerabschnitte längs der ersten Transportstrecke mit einer Schrittweite S intermittierend fortzubewegen, die im Wesentlichen dem n-fachen Abstand x zwischen gleichartigen Stellen, vorzugsweise Mitten zweier aufeinanderfolgender Werkstückträgerabschnitte längs der ersten Transportstrecke oder einem ganzzahligen Vielfachen davon entspricht, so dass bei jedem Schritt Gruppen aus n aufeinander folgenden Werkstückträgerabschnitten um eine Strecke S = n x in Transportrichtung vorbewegt werden, wobei n die Anzahl an Montagevorrichtungen ist. Nummeriert man die Werkstückträgerabschnitte jeder Gruppe von 1 bis n durch, so sind jeder Nummer feste Stopppositionen längs der ersten Transportstrecke in dem Sinne zugeordnet, dass von sämtlichen Werkstückträgerabschnitten diejenigen mit der gleichen Nummer an jeweils gleichen Stopppositionen halten. In diesem Sinne können auch periodisch die Stopppositionen längs der ersten Transportstrecke durchnummeriert werden, wobei die Anzahl der Perioden der Anzahl der Gruppen von Werkstückträgerabschnitten entspricht. So kommen Werkstückträgerabschnitte mit einer bestimmten Nummer nur an den Stopppositionen mit der gleichen Nummer längs der ersten Transportstrecke zum Halt. Dies gilt für alle Werkstückträgerabschnitte. Die n Montagevorrichtungen sind in ihrer Zuordnung zu Stopppositionen der Werkstückträgerabschnitte längs der ersten Transportstrecke über Stopppositionen mit den Nummern 1 bis n verteilt, wobei auf eine jeweilige Stopppositionsnummer jeweils eine Montagevorrichtung kommt. Ist eine Montagevorrichtung einer Stoppposition mit einer bestimmten Stopppositionsnummer in einer Periode zugeordnet, so ist der gleichen Stopppositionsnummer einer anderen Periode keine Montagevorrichtung zugeordnet. Die Gesamtzahl der Stopppositionen entlang der ersten Transportstrecke soll durch n ohne Rest teilbar sein.

Gemäß einer Ausführungsform der Erfindung sind zwei Montagevorrichtungen vorgesehen, so dass n = 2 und S = 2 x, wobei der Abstand (D) zwischen den Positionen der beiden Montagevorrichtung längs der ersten Transportstrecke dem Abstand x zwischen gleichartigen Stellen, vorzugsweise Mitten, zweier aufeinanderfolgender Werkstückträgerabschnitte längs der ersten Transportstrecke oder einem ungeradzahligen Vielfachen davon entspricht.

Aus Gründen optimierter Platzausnutzung ist es oft vorteilhaft, wenn die erste Transportstrecke wenigstens einen linearen Abschnitt aufweist, wobei die Montagevorrichtungen vorzugsweise an dem linearen Abschnitt der ersten Transportstrecke in Zuordnung zu betreffenden Stopppositionen der Werkstückträgerabschnitte positioniert sind. Besonders vorteilhaft in diesem Sinne ist es, wenn die erste Transportstrecke in Draufsichtsprojektion als Oval aus zwei durch lineare Abschnitte miteinander verbundenen Halbkreisbögen gebildet ist. Die linearen Abschnitte können dann sehr gut für eine platzoptimierte Positionierung der Montagevorrichtungen einerseits und von Übergabeeinrichtungen zur Übergabe von ersten Bauteilkomponenten zu Werkstückträgerabschnitten der ersten Transporteinrichtung andererseits sowie auch zur günstigen Positionierung von Ausbringeinrichtungen zum Ausbringen von Bauteilen aus den Werkstückträgerabschnitten und zum Ausschleusen der Bauteile aus der ersten Transporteinrichtung genutzt werden.

Häufig handelt es sich zumindest bei den zweiten Bauteilkomponenten um winzige und/oder filigrane Stanzteile. Insbesondere im Rahmen einer solchen Anwendung ist es gemäß einer Ausgestaltung der Erfindung vorgesehen, die zweiten Bauteilkomponenten an einem diesen zugeordneten Haltestreifen zu bewegen, so dass zu den Stoppzeiten der intermittierenden Transportbewegung der ersten Transporteinrichtung an den Montagevorrichtungen stets eine jeweilige Anzahl an zweiten Bauteilkomponenten bereitstehen, die dem Bedarf an zweiten Bauteilkomponenten zum Zusammenfügen mit den ersten Bauteilkomponenten den Montagevorrichtungen jeweils entspricht. Bei diesen Haltestreifen und den daran angeordneten zweiten Bauteilkomponenten handelt es sich vorzugsweise um einen Stanzstreifen, bei dem der Haltestreifen und die zweiten Bauteilkomponenten stoffschlüssig zusammenhängen. Mit anderen Worten handelt es sich bei dem Haltestreifen um stoffschlüssig mit den zweiten Bauteilkomponenten zusammenhängenden Überbleibseln eines Rohmaterialstreifens, der einem Stanzprozess mittels einer Stanzpresse unterzogen worden ist, um die zweiten Bauteilkomponenten zu bilden. Eine solche Stanzpresse kann der Vorrichtung zur Herstellung eines Bauteils aus wenigstens zwei Bauteilkomponenten in Serienfertigung unmittelbar oder mittelbar vorgeschaltet sein, so dass der die Stanzpresse verlassende Stanzstreifen unmittelbar der Vorrichtung nach der Erfindung zugeführt wird. Ggf. kann zwischen einer solchen Stanzpresse und der Vorrichtung nach der Erfindung auch noch eine Umformvorrichtung zwischengeschaltet sein, etwa um die zweiten Bauteilkomponenten einem Biegeprozess zu unterziehen; oder etwa eine Schweißstation, um einen Kontakt aufzuschweißen. Solche Vorrichtungen können ggf. auch in die Vorrichtung nach der Erfindung integriert sein.

Die zweite Transporteinrichtung ist gemäß einer Ausführungsform der Erfindung mit an einem Haltestreifen zugeführten zweiten Bauteilkomponenten dazu eingerichtet, den Haltestreifen mit den daran angeordneten zweiten Bauteilkomponenten getaktet intermittierend vorzubewegen, wobei der Schritttakt der zweiten Transporteinrichtung und der Schritttakt der ersten Transporteinrichtung aufeinander abgestimmt, insbesondere synchronisiert sind. Eine solche Lösung ist sehr einfach zu realisieren. Die Folgedichte zweiter Bauteilkomponenten an dem Haltestreifen ist vorzugsweise so gewählt, dass nach jedem Schritt die jeweilige benötigte Menge an zweiten Bauteilkomponenten zur Weiterbearbeitung an den Montagevorrichtungen ansteht. Hierzu ist den Montagevorrichtungen jeweils eine Einrichtung zum Trennen der bereitgestellten zweiten Bauteilkomponenten von ihrem Haltestreifen zugeordnet. Die vereinzelten zweiten Bauteilkomponenten können dann mittels Übergabevorrichtungen bzw. Bestückungsautomaten der Montagevorrichtungen den Werkstückträgerabschnitten der ersten Transporteinrichtung zugeführt werden, um dort mit den bereitgestellten ersten Bauteilkomponenten vereinigt zu werden.

Gemäß einer weiteren vorteilhaften Ausgestaltung der Erfindung mit an einem Haltestreifen, vorzugsweise Stanzstreifen, zugeführten zweiten Bauteilkomponenten, ist es vorgesehen, dass der Haltestreifen eine Längsteilung in der Weise aufweist, dass er zwei gesonderte, in Streifenlängsrichtung verlaufende Randsaumstreifenabschnitte hat, deren Abstand quer zur Streifenlängsrichtung im Wesentlichen konstant ist und deren jeder einen Haltestreifenrandabschnitt bildet, von dem jeweilige zweite Bauteilkomponenten in Streifenlängsrichtung aufeinanderfolgend mit Freiräumen dazwischen quer zur Streifenlängsrichtung abstehen, derart, dass die zweiten Bauteilkomponenten des einen Haltestreifens in die Freiräume der Bauteilkomponenten des anderen Haltestreifens hineinragen.

Eine solche Lösung ermöglicht in vielen Fällen eine größere Folgedichte aufeinander folgender zweiter Bauteilkomponenten an dem Haltestreifen bei sehr geringem Verschnitt etwa beim Stanzen oder einem anderen Materialtrennvorgang an einem betreffenden Rohmaterialstreifen.

Der ersten Transporteinrichtung ist gemäß einer bevorzugten Ausführungsform der Erfindung wenigstens eine Übergabevorrichtung zugeordnet, die dazu eingerichtet ist, erste Bauteilkomponenten den Werkstückträgerabschnitten der ersten Transporteinrichtung zuzuführen, so dass jeder Werkstückträgerabschnitt eine mittels der ersten Transporteinrichtung zu den Montagevorrichtungen zu transportierende jeweilige Anzahl an ersten Bauteilkomponenten erhält. Entsprechend kann auch eine Ausbringvorrichtung zum Ausbringen von zusammengesetzten Bauteilen aus den Werkstückträgerabschnitten und der ersten Transportstrecke vorgesehen sein.

Ausführungsbeispiele der Erfindung werden nachstehend unter Bezugnahme auf die Figuren näher erläutert.

Figur 1      zeigt in einer schematischen Draufsichtsdarstellung ein erstes Ausführungsbeispiel der Erfindung.

Figur 2      zeigt in einer schematischen Draufsichtsdarstellung ein zweites Ausführungsbeispiel der Erfindung.

Figur 3a bis 3c      zeigen in schematischen Darstellungen eine erste Transportstrecke mit periodisch durchnummerierten Stopppositionen für Werkstückträgerabschnitte mit unterschiedlichen Möglichkeiten der Positionierung von Montagevorrichtungen.

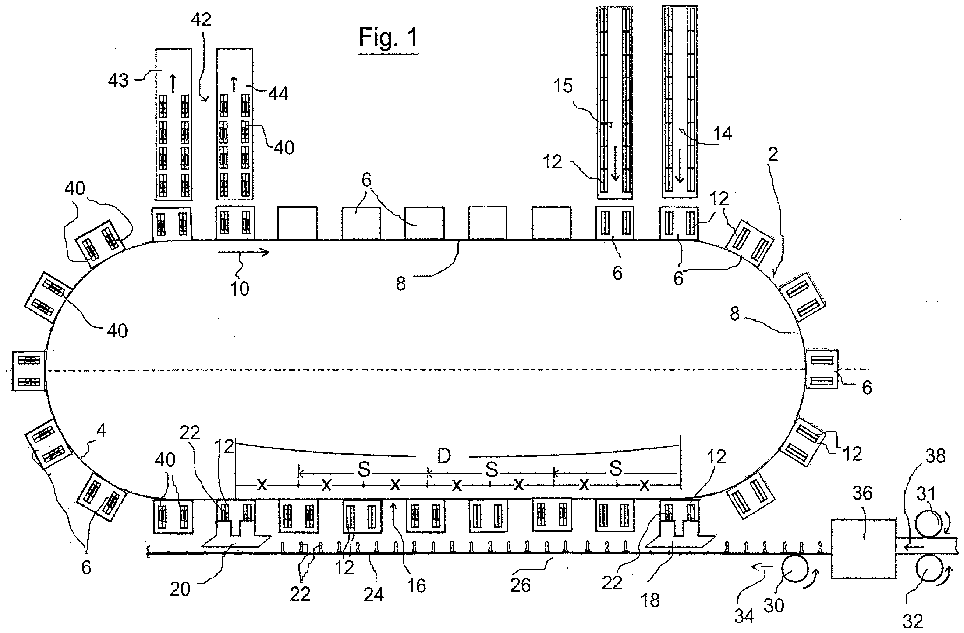

In Figur 1 ist eine erste Transporteinrichtung 2 durch ein Endlosband 4 in Form einer geschlossenen ovalen Schleife mit daran angeordneten Werkstückträgerabschnitten 6 repräsentiert. Das Endlosband 4 wird mittels (nicht gezeigter) Antriebsmittel der ersten Transporteinrichtung 2 getaktet intermittierend und im Uhrzeigersinn umlaufend längs einer ovalen ersten Transportstrecke 8 gemäß dem Pfeil 10 angetrieben. Die Werkstückträgerabschnitte 6 sind im Wesentlichen äquidistant aufeinanderfolgend mit Abständen x von Werkstückträgerabschnittsmitte zu Werkträgerabschnittsmitte an dem Endlosband 4 angeordnet und dazu eingerichtet, jeweils zwei paarweise zusammenhängende Kontaktgehäuse 12 als erste Bauteilkomponenten 12 aufzunehmen, wobei diese Kontaktgehäusepaare von Übergabevorrichtungen 14, 15 aus einem betreffenden Magazin zugeführt werden.

Die beiden Übergabevorrichtungen 14, 15 sind so dem Abstand x angepasst angeordnet, dass sie simultan jeweils zwei aufeinanderfolgende Werkstückträgerabschnitte 6 während der Stoppzeiten der intermittierenden Transportbewegung der ersten Transporteinrichtung 2 mit Kontaktgehäusepaaren 12, 12, bestücken können.

In jedem Transporttakt der ersten Transporteinrichtung 2 werden somit zwei aufeinanderfolgende Werkstückträgerabschnitte 6 mit ersten Bauteilkomponenten 12 bestückt, so dass die Bauteilkomponenten 12 in einer vorbestimmten Position relativ zu dem betreffenden Werkstückträgerabschnitt 6 an diesem vorübergehend angeordnet werden.

Die Transportbewegung der ersten Transporteinrichtung 2 läuft gesteuert ab, wobei die Schrittweite S eines Transportschrittes dem doppelten Abstand x zwischen zwei aufeinanderfolgenden Werkstückträgerabschnitten 6 entspricht. Auf diese Weise wird sichergestellt, dass den Übergabevorrichtungen 14, 15 nach jedem Transportschritt der ersten Transporteinrichtung 2 zwei aufeinander folgende leere Werkstückträgerabschnitte 6 zur Bestückung mit ersten Bauteilkomponenten 12 gegenüber stehen.

Die mit den ersten Bauteilkomponenten 12 bestückten Werkstückträgerabschnitte 6 werden - von den Übergabevorrichtungen 14, 15 kommend - längs der ersten Transportstrecke 8 schrittweise mit der Schrittweite S weitertransportiert, so dass sie in den in Figur 1 unteren linearen Abschnitt 16 der ersten Transportstrecke 2 gelangen. An diesem linearen Abschnitt 16 sind mit einem Abstand D längs der ersten Transportstrecke 2 zwei Montagevorrichtungen 18, 20 angeordnet, welche dazu eingerichtet sind, zweite Bauteilkomponenten 22 mit den ersten Bauteilkomponenten 12 an den jeweiligen Werkstückträgerabschnitten 6, 6 in vorbestimmter Weise zu verbinden.

Bei den zweiten Bauteilkomponenten 22 handelt es sich im Beispielsfall um Stanzteile aus einem metallischen Kontaktmaterial, die an einem Haltestreifen 24 längs einer zweiten Transportstrecke 26, die im Beispielsfall (in Draufsichtsprojektion) parallel zu dem unteren linearen Abschnitt 16 der ersten Transportstrecke 8 verläuft, den Montagevorrichtungen 18, 20 zugeführt werden. Eine zweite Transporteinrichtung ist in Figur 1 schematisch durch Antriebsrollen 30 - 32 repräsentiert, die unmittelbar auf den Haltestreifen 24 bzw. auf einen Rohmaterialstreifen 38 in Richtung des Pfeils 34 vorschiebend einwirken.

Mit 36 ist in Figur 1 eine Stanzpresse gekennzeichnet, welcher der Rohmaterialstreifen 38, der üblicherweise von einem Coil abgewickelt worden ist, zugeführt wird und von dem in der Stanzpresse 36 in einem Stanzprozess überschüssiges Material getrennt wird, so dass der Haltestreifen 24 mit den stoffschlüssig damit zusammenhängenden zweiten Bauteilkomponenten 22 übrig bleibt und die Stanzpresse 36 in Richtung der zweiten Transportstrecke 26 verlässt. Der Haltestreifen 24 mit den daran vorgesehenen Bauteilkomponenten 22 kann längs der zweiten Transportstrecke 26 eine oder mehrere Schlaufen mit Verlauf quer zur Zeichnungsebene von Figur 1 aufweisen.

Die zweite Transporteinrichtung 30 - 32 ist dazu eingerichtet, in einem Transporttakt entsprechend dem Transporttakt der ersten Transporteinrichtung 2 den Montagevorrichtungen 18, 20 jeweils so viele zweite Bauteilkomponenten 22 bereitzustellen, wie es für die Soll-Bestückung erster Bauteilkomponenten 12 mit zweiten Bauteilkomponenten 22 durch die Montagevorrichtungen 18, 20 während jeder Stoppphase der intermittierenden Bewegung der ersten Transporteinrichtung 2 erforderlich ist.

Der Abstand D zwischen den Montagevorrichtungen 18, 20 entspricht in dem Beispielsfall gemäß Figur 1 dem Siebenfachen des Abstandes x zwischen den Mitten (Mittenabstand) von zwei aufeinanderfolgenden Werkstückträgerabschnitten 6. Grundsätzlich kommt bei Vorhandensein zweier Montagevorrichtungen 18, 20 ein Abstand D in Frage, der x oder einem ungeradzahligen Vielfachen von x entspricht. Auf diese Weise wird es erreicht, dass bei der intermittierenden Transportbewegung der ersten Transporteinrichtung 2 mit der Schrittweite S = 2 x jeder zweite mit ersten Bauteilkomponenten 12 bestückte Werkstückträgerabschnitt 6 an der ersten Montagevorrichtung 18 in den Stoppzeiten der Transportbewegung zum Halten kommt, wohingegen Werkstückträgerabschnitte 6, welche die erste Montagevorrichtung 18 in diesem Sinne bei der Transportbewegung übersprungen haben, jeweils an der zweiten Montagevorrichtung 20 zum Halten kommen, so das nach Passieren der zweiten Montagevorrichtung 20 lückenlos sämtliche Werkstückträgerabschnitte 6 der ersten Transporteinrichtung mit aus den beiden Bauteilkomponenten 12, 22 zusammengesetzten Bauteilen 40 belegt sind, bis sie eine Ausbringstation 42 erreicht haben, an welcher die Bauteile 40 mittels zweier Ausbringvorrichtungen 43, 44 von der ersten Transporteinrichtung 2 entfernt werden. Die so entleerten Werkstückträgerabschnitte 6 gelangen dann wieder zu den Übergabevorrichtungen 14, 15, um neue erste Bauteilkomponenten 12 aufzunehmen. Hinzuzufügen ist noch, dass bei dem Ausführungsbeispiel gemäß Figur 1 den Montagevorrichtungen 18, 20 Einrichtungen (nicht gezeigt) zum Abtrennen der Stanzteile 22 von dem Haltestreifen 24 zugeordnet sind. Im Beispielsfall der Figur 1 hängen jeweils zwei erste Bauteilkomponenten 12 fest zusammen und verlassen die Vorrichtung nach der Erfindung auch in dieser zusammenhängenden Weise als Bauteile 40 nach der Bestückung mit zweiten Bauteilkomponenten 22.

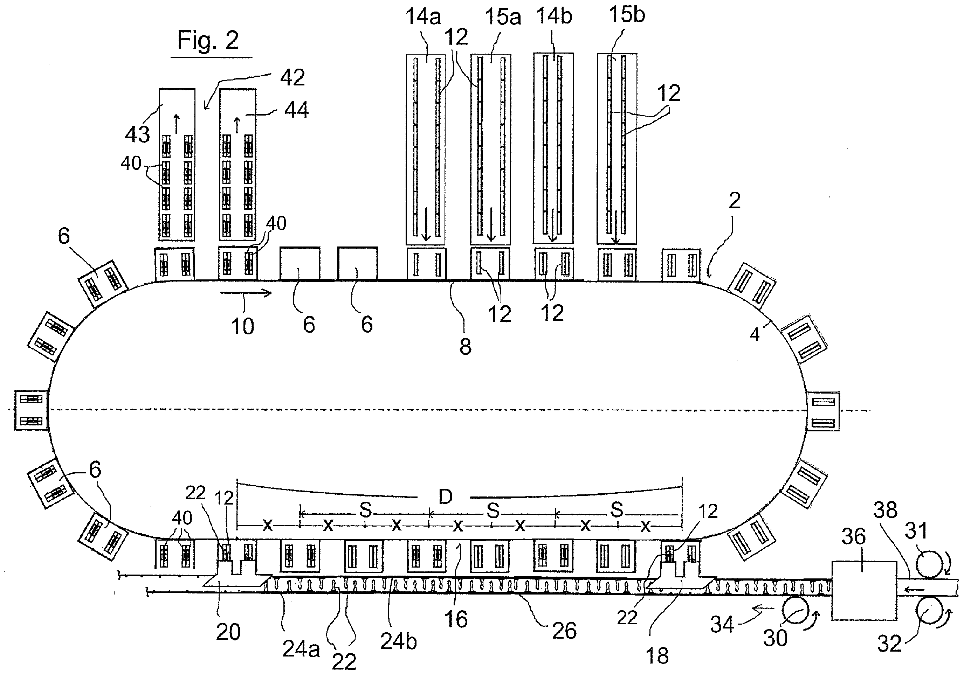

Das Ausführungsbeispiel gemäß Figur 2 ist eine Abwandlung des oben beschriebenen Ausführungsbeispiels nach Figur 1. Merkmale in Figur 2, die Merkmalen in Figur 1 gegenständlich oder funktional entsprechen, sind mit korrespondierend gleichen Bezugszeichen gekennzeichnet, so dass sich die folgende Erläuterung des Ausführungsbeispiels nach Figur 2 auf Unterschiede des Ausführungsbeispiels nach Figur 2 gegenüber dem Ausführungsbeispiel nach Figur 1 beschränken kann.

Bei dem Ausführungsbeispiel nach Figur 2 sind Übergabevorrichtungen 14a, 15a und 14b, 15b in dem in Figur 2 oberen linearen Abschnitt der ersten Transportstrecke 8 vorgesehen, welche so ausgestaltet sind, dass sie jeweils zwei Einzelgehäuse 12 als erste Bauteilkomponenten pro Taktschritt der ersten Transporteinrichtung 2 an die Werkstückträgerabschnitte 6 abgeben. In Laufrichtung 10 der ersten Transporteinrichtung 2 erreichen zwei zunächst leere Werkstückträgerabschnitte 6 zuerst die Übergabevorrichtungen 14a und 15a nach einem betreffenden Transportschritt mit der Schrittweite S. Dabei werden jeweils zwei erste Bauteilkomponenten 12 an die Werkstückträgerabschnitte 6 abgegeben. Nach einem weiteren Transportschritt der 1. Transporteinrichtung 2 gelangen die betreffenden Werkstückträgerabschnitte 6 von den Übergabevorrichtungen 14a, 15a zu den benachbarten Übergabevorrichtungen 14b, 15b und erhalten dort weitere zwei Einzelgehäuse 12 als erste Bauteilkomponenten 12, wobei letztere zwischen den bereits auf den Werkstückträgerabschnitten 6 platzierten ersten Bauteilkomponenten 12 angeordnet werden. Im weiteren Verlauf der ersten Transportstrecke 8 transportieren die Werkstückträgerabschnitte 6 somit wieder Gruppen von ersten Bauteilkomponenten 12.

An den Montagevorrichtungen 18 und 20 werden die ersten Bauteilkomponenten 12 wiederrum mit zweiten Bauteilkomponenten 22 vereinigt.

Auch die zweiten Bauteilkomponenten 22 sind Stanzteile, die an Haltestreifenabschnitten 24 a und 24 b längs der zweiten Transportstrecke 26 mittels einer zweiten Transporteinrichtung 30 - 32 bewegt werden. Abweichend von dem Haltestreifen mit zweiten Bauteilkomponenten aus Figur 1 weist der betreffende Stanzstreifen in Figur 2 eine Teilung in Längsrichtung auf, so das er zwei Randsaumabschnitte als Haltestreifenabschnitte 24a, 24b hat, von denen quer zur Streifenlängsrichtung zweite Bauteilkomponenten 22 von einem Haltestreifenabschnitt 24a in Lücken zwischen zweiten Bauteilkomponenten 22 des anderer Haltestreifenabschnittes 24b und umgekehrt abstehen, so das zwei ineinandergreifende Kammstrukturen vorliegen. Eine derartige Stanzstreifenstruktur lässt sich in vielen Fällen mit einer hohen Folgedichte aufeinander folgender Stanzteile 22 und geringem Verschnitt beim Stanzen erzeugen. Der ersten Montagevorrichtung 18 und der zweiten Montagevorrichtung 20 sind jeweils (nicht gezeigte) Einrichtungen zum Trennen von zweiten Bauteilkomponenten 22 von den Stanzstreifenabschnitten 24a, 24b zugeordnet. Die Prozesssteuerung sorgt auch im Fall des Ausführungsbeispiels nach Figur 2 dafür, dass die erste Transporteinrichtung 2 die Werkstückträgerabschnitte 6 mit einer getaktet intermittierenden Transportbewegung mit der Schrittweite S = 2x vorbewegt. Dabei stehen an den Montagevorrichtungen 18, 20 jeweils so viele zweite Bauteilkomponenten 22 an, wie sie für die Bestückung der jeweiligen ersten Bauteilkomponenten 12 an den Montagevorrichtungen 18, 20 erforderlich sind.

Bei den vorstehend unter Bezugnahme auf die Figuren 1 und 2 beschriebenen Ausführungsbeispielen waren bei der erfindungsgemäßen Vorrichtung zur Herstellung eines Bauteils aus wenigstens zwei Bauteilkomponenten in Serienfertigung zwei Montagevorrichtungen längs der ersten Transportstrecke 8 vorgesehen. Zur Steigerung der Produktivität der Vorrichtung können im Rahmen der vorliegenden Erfindung auch mehr als zwei Montagevorrichtungen längs der ersten Transportstrecke vorgesehen sein.

Dabei ist es vorteilhaft, oben bereits erwähnte Gesetzmäßigkeiten bei der Positionierung der Montagevorrichtungen längs der ersten Transportstrecke und dem Betrieb der ersten Transporteinrichtung zu berücksichtigen.

Eine dieser Gesetzmäßigkeiten betrifft die Schrittweite S der intermittierenden Vorschubtransportbewegung der ersten Transporteinrichtung. S = n x , wobei n die Anzahl der Montagevorrichtungen - und x der Mittenabstand zwischen zwei unmittelbar aufeinander folgenden Werkstückträgerabschnitten ist, wobei vorausgesetzt ist, dass die Werkstückträgerabschnitte im Wesentlichen äquidistant aufeinanderfolgend längs der ersten Endlos-Transportstrecke 8 verteilt sind.

Dementsprechend wurde bei den bereits beschriebenen Ausführungsbeispielen mit zwei Montagevorrichtungen 18, 20 eine Schrittweite S = 2x gewählt.

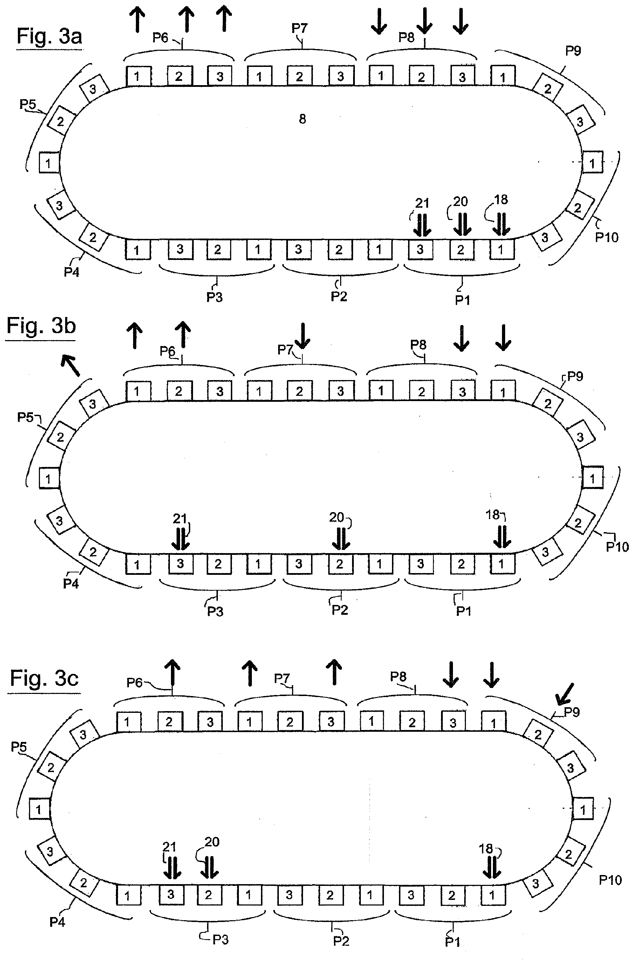

Unter Bezugnahme auf die Figuren 3a bis 3c werden nachstehend die angesprochenen Gesetzmäßigkeiten der Positionierung der Montagevorrichtungen und dem Betrieb der ersten Transporteinrichtung für ein Beispiel mit drei Montagevorrichtungen näher erläutert.

Die Figuren 3a bis 3c zeigen schematisch eine Transportstrecke 8 mit zehn Gruppen oder Perioden P1 - P10 aus jeweils drei Stopppositionen für Werkstückträgerabschnitte wobei die Stopppositionen in jeder Stopppositionsperiode mit den Stopppositionsnummern 1-3 durchnummeriert sind, so dass periodisch die Stopppositionsnummern 1, 2, 3 zehnmal vorkommen. Die Stopppositionen sind äquidistant längs der ersten Transportstrecke 8 gleichmäßig verteilt, wie entsprechend auch Werkstückträgerabschnitte (nicht gezeigt) längs der ersten Transportstrecke 8 gleichmäßig verteilt sind.

Die Anzahl der Stopppositionen in jeder Stopppositionsperiode P1 - P10 soll der Anzahl n der Montagevorrichtungen entsprechen, dies ist im Beispielsfall der Figuren 3a bis 3c die Anzahl n = 3. Die Schrittweite S der intermittierenden Transportbewegung der ersten Transporteinrichtung längs der ersten Transportstrecke 8 entspricht der Anzahl n = 3 der Montagevorrichtungen multipliziert mit dem Mittenabstand x zwischen zwei unmittelbar aufeinander folgenden Stopppositionen (entsprechend dem Mittenabstand x zweier unmittelbar aufeinanderfolgender Werkstückträgerabschnitte), also im Beispielsfall S = 3 x.

Die erste Transporteinrichtung ist dazu eingerichtet, bei jedem Schritt ihrer intermittierenden Transportbewegung Gruppen aus 3 aufeinander folgenden Werkstückträgerabschnitten um eine Strecke S = 3 x in Transportrichtung (beispielsweise im Uhrzeigersinn) vorzubewegen. Nummeriert man auch die Werkstückträgerabschnitte jeder Gruppe von 1 bis 3 durch, so kann jeder Stopppositionsnummer längs der ersten Transportstrecke 8 eine gleiche Werkstückträgerabschnittsnummer in dem Sinne zugeordnet werden, dass von sämtlichen Werkstückträgerabschnitten diejenigen mit der gleichen Werkstückträgerabschnittsnummer an Stopppositionen mit der entsprechend gleichen Stopppositionsnummer halten, d.h. die Stopppositionsnummern und die Werkstückträgerabschnittsnummern sind bei diesem Modell stets 1:1 aufeinander abgebildet, so dass an den Stopppositionen mit der Stopppositionsnummer 1 nur Werkstückträgerabschnitte mit der Werkstückträgerabschnittsnummer 1 zum Halten kommen, an den Stopppositionen mit der Stopppositionsnummer 2 nur Werkstückträgerabschnitte mit der Werkstückträgerabschnittsnummer 2 zum Halten kommen und an den Stopppositionen mit der Stopppositionsnummer 3 nur Werkstückträgerabschnitte mit der Werkstückträgerabschnittsnummer 3 zum Halten kommen. (Dies ist für eine beliebige positive ganze Zahl n im Falle von n vorhandenen Montagevorrichtungen bei entsprechender Schrittweiten- und Positionsperioden- bzw. Werkstückträgerabschnittsgruppenanpassung verallgemeinerbar).

Die 3 Montagevorrichtungen in den Figuren 3a bis 3c sind in ihrer Zuordnung zu Stopppositionen der Werkstückträgerabschnitte längs der ersten Transportstrecke über Stopppositionen mit den Nummern 1 bis 3 verteilt, wobei auf eine jeweilige Stopppositionsnummer jeweils eine Montagevorrichtung kommt. Ist eine Montagevorrichtung einer Stoppposition mit einer bestimmten Stopppositionsnummer in einer Stopppositionsperiode zugeordnet, so ist der gleichen Stopppositionsnummer einer anderen Stopppositionsperiode keine Montagevorrichtung zugeordnet. Hieraus ergeben sich verschiedene Möglichkeiten der Positionierung der drei Montagevorrichtungen, wovon drei Möglichkeiten in den Figuren 3a bis 3c mittels der Doppelpfeile 18, 20, 21 angedeutet sind.

In Figur 3a sind die durch die Doppelpfeile 18, 20, 21 repräsentierten Montagevorrichtungen sämtlich den Positionen 1, 2, 3 ein- und derselben Periode P1 zugeordnet, d.h. zur Bearbeitung oder ggf. Übernahme von ersten Bauteilkomponenten von den an diesen Positionen 1, 2, 3 nach einem jeweiligen Transportschritt mit der Schrittweite S jeweils stoppenden Werkstückträgerabschnitten 1, 2, 3 positioniert.

In Figur 3b sind die durch die Doppelpfeile 18, 20, 21 repräsentierten Montagevorrichtungen über drei aufeinanderfolgende Stopppositionsperioden P1, P2, P3 verteilt, wobei auch in diesem Fall bei der Zuordnung einer Montagevorrichtung zu einer Stopppositionsnummer keine weitere Zuordnung einer Montagevorrichtung zu der gleichen Stopppositionsnummer in einer anderen Stopppositionsperiode P vorkommt. Da in diesem Beispielsfall der Figur 3b bereits die durch den Doppelpfeil 18 repräsentierte Montagevorrichtung der Stopppositionsnummer 1 in der Stopppositionsperiode P1 zugeordnet ist, kommt es nicht vor, dass der Stopppositionsnummer 1 in irgendeiner anderen Stopppositionsperiode P eine weitere Montagevorrichtung der hier betrachteten Art zugeordnet ist. Entsprechend gilt dies für die Stoppposition mit der Stopppositionsnummer 2, welche nur in der Stopppositionsperiode P2 mit einer Montagevorrichtung (dort durch den Doppelpfeil 20 repräsentiert) verknüpft ist, sowie für die Stopppositionsnummer 3, welche nur in der Stopppositionsperiode P3 mit einer Montagevorrichtung (dort durch den Doppelpfeil 21 repräsentiert) verknüpft ist.

In Figur 3c ist ein weiteres Beispiel der Verteilung der Montagevorrichtungen dargestellt, wobei in diesem Beispiel der Stopppositionsnummer 1 in der Stopppositionsperiode P1 eine Montagevorrichtung (dort durch den Doppelpfeil 18 repräsentiert) zugeordnet ist, wohingegen den Stopppositionsnummern 2 und 3 in der Stopppositionsperiode P3 jeweils eine Montagevorrichtung (dort durch die Doppelpfeile 20 bzw. 21 repräsentiert) zugeordnet ist.

Nach dem unter Bezugnahme auf die Figuren 3a-3c erläuterten Schema bestehen noch diverse weitere Möglichkeiten der Verteilung der drei Montagevorrichtungen. Dieses Schema ist auf ein Beispiel mit beliebig vielen Montagevorrichtungen verallgemeinerbar.

Es ist derzeit bevorzugt, die Montagevorrichtungen an einem linearen Abschnitt der ersten Transportstrecke 8 unterzubringen, was nicht bedeutet, dass Montagevorrichtungen nicht auch oder ausschließlich an gekrümmten Abschnitten der ersten Transportstrecke 8 vorgesehen sein können.

Nach dem gleichen Schema können auch Übergabevorrichtungen zur Zuführung von ersten Bauteilkomponenten zu Werkstückträgerabschnitten an betreffenden Stopppositionen verteilt werden, wie dies in den Figuren 3a bis 3c ebenfalls anhand von drei Beispielen angedeutet ist, wobei die Übergabevorrichtungen durch die von außen auf die Stopppositionen weisenden Pfeile U1, U2, U3 repräsentiert sind. Die Anzahl an Übergabevorrichtungen entspricht in diesem Beispielsfall der Anzahl n der Montagevorrichtungen.

Nach dem gleichen Schema können auch Ausbringvorrichtungen zum Entfernen und Ableiten von fertigen Bauteilen oder dergleichen von betreffenden Werkstückträgerabschnitten an betreffenden Stopppositionen verteilt werden, wie dies in den Figuren 3a bis 3c ebenfalls anhand von drei Beispielen angedeutet ist, wobei die Ausbringvorrichtungen durch von den Stopppositionen nach außen weisenden Pfeile A1, A2, A3 repräsentiert sind. Die Anzahl an Ausbringvorrichtungen entspricht in diesem Beispielsfall der Anzahl n der Montagevorrichtungen.

Bei den vorstehend unter Bezugnahme auf die Figuren erläuterten Ausführungsbeispielen der Erfindung handelt es sich um solche, bei denen die erste Transporteinrichtung in einem getaktet intermittierenden, also diskontinuierlichen Modus betrieben wurde. Wie oben dargelegt, können entsprechend aufgebaute Vorrichtungen nach der Erfindung auch für einen kontinuierlich durchlaufenden Betrieb der ersten Transporteinrichtung eingerichtet sein.

Einem Schritt der intermittierenden Bewegung mit der Schrittweite S der vorstehend unter Bezugnahme auf die Figuren erläuterten Ausführungsbeispiele entspricht bei einer bevorzugten Ausführungsform der Erfindung mit kontinuierlichem Transportbetrieb mit konstanter Vorschubgeschwindigkeit V der ersten Transporteinrichtung einer jeweils zurückgelegten Strecke S, deren Länge sich aus dem Produkt aus der Vorschubgeschwindigkeit V der ersten Transporteinrichtung und dem Zeitabstand $\Delta t$ zwischen zwei unmittelbar aufeinanderfolgenden Bereitstellungszeitpunkten der ersten Transporteinrichtung ergibt:

$$S = V\,\Delta t = n\,x\;,$$

wobei n der Anzahl der vorgesehenen Montagevorrichtungen-

und x der Mittenabstand zweier aufeinanderfolgender Werkstückträgerabschnitte ist. n und x stehen somit für normalerweise gegebene geometrische Parameter der Vorrichtung. Der Zeitabstand $\Delta t$ steht normalerweise auch fest. Die für einen optimalen Betrieb der Vorrichtung erforderliche Vorschubgeschwindigkeit V der ersten Transporteinrichtung kann dann bei gegebenem Zeitabstand $\Delta t$ zwischen zwei aufeinander folgenden Bereitstellungszeitpunkten aus der obigen Gleichung durch Umstellung ermittelt werden:

$$V = nx/\,\Delta t.$$

**Patentansprüche**

1. Vorrichtung zur Herstellung von Bauteilen (40) aus jeweils wenigstens zwei Bauteilkomponenten (12, 22) in Serienfertigung, umfassend

   - eine bestimmte Anzahl n>1 an Montagevorrichtungen (18, 20) zum Zusammenfügen erster Bauteilkomponenten (12) und zweiter Bauteilkomponenten (22) zu Bauteilen (40),
   - eine erste Transporteinrichtung (2), die zum Transport erster Bauteilkomponenten (12) zu den Montagevorrichtungen (18, 20) längs einer als geschlossene Endlosstrecke gestalteten ersten Transportstrecke (8) eingerichtet ist, derart, dass an allen Montagevorrichtungen (18, 20) zu bestimmten aufeinanderfolgenden Bereitstellungszeitpunkten der ersten Transporteinrichtung (2) jeweils wenigstens eine erste Bauteilkomponente (12) zur im Wesentlichen simultanen Übernahme oder/und Bearbeitung durch die Montagevorrichtungen (18, 20) bereitsteht,
   - eine zweite Transporteinrichtung (30 - 32), die zum Transport zweiter Bauteilkomponenten (22) zu den Montagevorrichtungen (18, 20) eingerichtet ist, derart, dass zu den Bereitstellungszeitpunkten der ersten Transporteinrichtung (2) eine jeweilige Anzahl an zweiten Bauteilkomponenten (22) an den Montagevorrichtungen (18, 20) bereitsteht, die dem Bedarf an zweiten Bauteilkomponenten (22) zum Zusammenfügen mit den ersten Bauteilkomponenten (12) an den Montagevorrichtungen (18, 20) jeweils entspricht,

wobei die erste Transporteinrichtung (2) längs der ersten Transportstrecke (8) zumindest näherungsweise äquidistant aufeinanderfolgende Werkstückträgerabschnitte (6) umfasst und dazu eingerichtet ist, diese umlaufend entlang der ersten Transportstrecke (8) zu bewegen, wobei die Werkstückträgerabschnitte (6) einzeln dazu eingerichtet sind, eine jeweilige erste Bauteilkomponente (12) oder ggf. eine jeweilige Gruppe an ersten Bauteilkomponenten (12) zum Transport aufzunehmen und längs der ersten Transportstrecke (8) entsprechend der Transportbewegung der ersten Transporteinrichtung (2) zu bewegen, wobei zumindest in einem bestimmten Streckenabschnitt der ersten Transportstrecke (8) die Abstände zwischen den Positionen der Montagevorrichtungen (18, 20) längs der ersten Transportstrecke (8) dem Abstand (x) zwischen gleichartigen Stellen, vorzugsweise den Mitten zweier aufeinanderfolgender Werkstückträgerabschnitte (6) längs der ersten Transportstrecke (8) oder einem ganzzahligen Vielfachen davon entsprechen, **dadurch gekennzeichnet, dass** die erste Transporteinrichtung (2) dazu ausgebildet ist, die Werkstückträgerabschnitte (6) kontinuierlich mit einer Vorschubgeschwindigkeit (V) längs der ersten Transportstrecke (8) vorzuschieben, wobei die Vorschubgeschwindigkeit (V) und die Abstände (D) zwischen den Positionen der Montagevorrichtungen (18, 20) längs der ersten Transportstrecke (8) so aufeinander abgestimmt sind, dass im Betrieb der ersten Transporteinrichtung (2) - zumindest nach einer Anlaufphase - an allen Montagevorrichtungen (18, 20) zu den Bereitstellungszeitpunkten der ersten Transporteinrichtung (2) ein jeweiliger Werkstückträgerabschnitt (6) derart bereitsteht, dass bei einem Umlauf der ersten Transporteinrichtung (2) seriell jeder der Werkstückträgerabschnitte (6) zu einem jeweiligen Bereitstellungszeitpunkt an einer jeweiligen betreffenden Montagevorrichtung (18, 20) bereitgestellt wird, wobei kein Werkstückträgerabschnitt (6) an mehr als einer Montagevorrichtung (18, 20) bereitgestellt wird.

2.    Vorrichtung zur Herstellung von Bauteilen (40) aus jeweils wenigstens zwei Bauteilkomponenten (12, 22) in Serienfertigung, umfassend

> - eine bestimmte Anzahl n>1 an Montagevorrichtungen (18, 20) zum Zusammenfügen erster Bauteilkomponenten (12) und zweiter Bauteilkomponenten (22) zu Bauteilen (40),
> - eine erste Transporteinrichtung (2), die zum Transport erster Bauteilkomponenten (12) zu den Montagevorrichtungen (18, 20) längs einer als geschlossene Endlosstrecke gestalteten ersten Transportstrecke (8) eingerichtet ist, derart, dass an allen Montagevorrichtungen (18, 20) zu bestimmten aufeinanderfolgenden Bereitstellungszeitpunkten der ersten Transporteinrichtung (2) jeweils wenigstens eine erste Bauteilkomponente (12) zur im Wesentlichen simultanen Übernahme oder/und Bearbeitung durch die Montagevorrichtungen (18, 20) bereitsteht,
- eine zweite Transporteinrichtung (30 - 32), die zum Transport zweiter Bauteilkomponenten (22) zu den Montagevorrichtungen (18, 20) eingerichtet ist, derart, dass zu den Bereitstellungszeitpunkten der ersten Transporteinrichtung (2) eine jeweilige Anzahl an zweiten Bauteilkomponenten (22) an den Montagevorrichtungen (18, 20) bereitsteht, die dem Bedarf an zweiten Bauteilkomponenten (22) zum Zusammenfügen mit den ersten Bauteilkomponenten (12) an den Montagevorrichtungen (18, 20) jeweils entspricht,

wobei die erste Transporteinrichtung (2) längs der ersten Transportstrecke (8) zumindest näherungsweise äquidistant aufeinanderfolgende Werkstückträgerabschnitte (6) umfasst und dazu eingerichtet ist, diese umlaufend entlang der ersten Transportstrecke (8) zu bewegen, wobei die Werkstückträgerabschnitte (6) einzeln dazu eingerichtet sind, eine jeweilige erste Bauteilkomponente (12) oder ggf. eine jeweilige Gruppe an ersten Bauteilkomponenten (12) zum Transport aufzunehmen und längs der ersten Transportstrecke (8) entsprechend der Transportbewegung der ersten Transporteinrichtung (2) zu bewegen, wobei zumindest in einem bestimmten Streckenabschnitt der ersten Transportstrecke (8) die Abstände zwischen den Positionen der Montagevorrichtungen (18, 20) längs der ersten Transportstrecke (8) dem Abstand (x) zwischen gleichartigen Stellen, vorzugsweise den Mitten zweier aufeinanderfolgender Werkstückträgerabschnitte (6) längs der ersten Transportstrecke (8) oder einem ganzzahligen Vielfachen davon entsprechen, wobei die erste Transporteinrichtung (2) dazu eingerichtet ist, die Werkstückträgerabschnitte (6) getaktet intermittierend mit einer gegebenen Schrittweite (S) längs der ersten Transportstrecke (8) vorzubewegen, **dadurch gekennzeichnet, dass** die Abstände (D) zwischen den Positionen der Montagevorrichtungen (18, 20) längs der ersten Transportstrecke (8) so aufeinander abgestimmt sind, dass im Betrieb der ersten Transporteinrichtung (2) - zumindest nach einer Anlaufphase - an allen Montagevorrichtungen (18, 20) in den den Bereitstellungszeitpunkten der ersten Transporteinrichtung (2) entsprechenden Stoppzeiten der intermittierenden Transportbewegung ein jeweiliger Werkstückträgerabschnitt (6) derart bereitsteht, dass bei einem Umlauf der ersten Transporteinrichtung (2) seriell jeder der Werkstückträgerabschnitte (6) in einer jeweiligen Stoppzeit der intermittierenden Transportbewegung an einer jeweiligen betreffenden Montagevorrichtung (18, 20) bereitgestellt wird, wobei kein Werkstückträgerabschnitt (6) an mehr als einer Montagevorrichtung (18, 20) bereitgestellt wird.

3. Vorrichtung zur Herstellung von Bauteilen aus jeweils wenigstens zwei Bauteilkomponenten in Serienfertigung nach Anspruch 1 oder 2, **dadurch gekennzeichnet, dass** die erste Transporteinrichtung (2) dazu eingerichtet ist, erste Bauteilkomponenten (12) gruppenweise zu den Montagevorrichtungen (18, 20) zu transportieren, so dass zu den Bereitstellungszeitpunkten der ersten Transporteinrichtung (2) eine jeweilige Gruppe aus ersten Bauteilkomponenten (12) an jeder der Montagevorrichtungen (18, 20) zur im Wesentlichen simultanen Bearbeitung durch die Montagevorrichtungen (18, 20) bereitsteht.

4. Vorrichtung zur Herstellung von Bauteilen aus jeweils wenigstens zwei Bauteilkomponenten in Serienfertigung nach Anspruch 1 oder Anspruch 3 in Kombination mit Anspruch 1, **dadurch gekennzeichnet, dass** die Bereitstellungszeitpunkte der ersten Transporteinrichtung (2) periodisch mit einem Zeitabstand $\Delta t$ aufeinanderfolgen, wobei die erste Transporteinrichtung (2) dazu eingerichtet ist, die Werkstückträgerabschnitte (6) längs der ersten Transportstrecke (2) mit einer vorzugsweise konstanten Vorschubgeschwindigkeit V kontinuierlich fortzubewegen, die im Wesentlichen dem n-fachen Abstand x zwischen gleichartigen Stellen, vorzugsweise den Mitten zweier aufeinanderfolgender Werkstückträgerabschnitte (6) längs der ersten Transportstrecke (8) dividiert durch den Zeitabstand $\Delta t$ zwischen zwei aufeinanderfolgenden Bereitstellungszeitpunkten entspricht, also:

$$V = nx/ \Delta t,$$

so dass während des Zeitabstandes $\Delta t$ Gruppen aus n aufeinander folgenden Werkstückträgerabschnitten (6) um eine Strecke S = n x in Transportrichtung vorbewegt werden, wobei n die Anzahl an Montagevorrichtungen ist.

5. Vorrichtung zur Herstellung von Bauteilen aus jeweils wenigstens zwei Bauteilkomponenten in Serienfertigung nach Anspruch 2 oder Anspruch 3 in Kombination mit Anspruch 2, **dadurch gekennzeichnet, dass** die Schrittweite S der intermittierenden Transportbewegung der ersten Transporteinrichtung (2) im Wesentlichen dem n-fachen Abstand x zwischen gleichartigen Stellen, vorzugsweise den Mitten zweier aufeinanderfolgender Werkstückträgerabschnitte (6) längs der ersten Transportstrecke (8) entspricht, so dass bei jedem Schritt Gruppen aus n aufeinander folgenden Werkstückträgerabschnitten (6) um eine Strecke S = n x in Transportrichtung vorbewegt werden, wobei n die Anzahl an Montagevorrichtungen ist.

6. Vorrichtung zur Herstellung von Bauteilen aus jeweils wenigstens zwei Bauteilkomponenten in Serienfertigung nach einem der vorhergehenden Ansprüche, **dadurch gekennzeichnet, dass** zwei Montagevorrichtungen (18, 20) vorgesehen sind, so dass der Abstand (D) zwischen den Positionen der beiden Montagevorrichtungen (18, 20) längs der ersten Transportstrecke (8) dem Abstand x zwischen gleichartigen Stellen, vorzugsweise den Mitten zweier aufeinanderfolgender Werkstückträgerabschnitte (6) längs der ersten Transportstrecke (8) oder einem ungeradzahligen Vielfachen davon entspricht.

7. Vorrichtung zur Herstellung von Bauteilen aus jeweils wenigstens zwei Bauteilkomponenten in Serienfertigung nach einem der vorhergehenden Ansprüche, **dadurch gekennzeichnet, dass** die erste Transportstrecke (8) wenigstens einen linearen Abschnitt (16) aufweist und dass die Montagevorrichtungen (18, 20) an dem wenigstens einen linearen Abschnitt (16) der ersten Transportstrecke (8) positioniert sind.

8. Vorrichtung zur Herstellung von Bauteilen aus jeweils wenigstens zwei Bauteilkomponenten in Serienfertigung nach einem der vorhergehenden Ansprüche, **dadurch gekennzeichnet, dass** die zweite Transporteinrichtung (30 - 32) dazu eingerichtet ist, zweite Bauteilkomponenten (22) an einem diesen zugeordneten Haltestreifen (24; 24a, 24b) zu bewegen, so dass zu den Bereitstellungszeitpunkten der ersten Transporteinrichtung (2) an den Montagevorrichtungen (18, 20) stets eine jeweilige Anzahl an zweiten Bauteilkomponenten (22) bereitstehen, die dem Bedarf an zweiten Bauteilkomponenten (22) zum Zusammenfügen mit den ersten Bauteilkomponenten (12) an den Montagevorrichtungen (18, 20) jeweils entspricht.

9. Vorrichtung zur Herstellung von Bauteilen aus jeweils wenigstens zwei Bauteilkomponenten in Serienfertigung nach Anspruch 8, **dadurch gekennzeichnet, dass** es sich bei dem Haltestreifen (24; 24a, 24b) und den daran angeordneten zweiten Bauteilkomponenten (22) um einen Stanzstreifen handelt, bei dem der Haltestreifen (24; 24a, 24b) und die zweiten Bauteilkomponenten (22) stoffschlüssig zusammenhängen.

**10.** Vorrichtung zur Herstellung von Bauteilen aus jeweils wenigstens zwei Bauteilkomponenten in Serienfertigung nach einem der Ansprüche 8 bis 9, **dadurch gekennzeichnet, dass** den einzelnen Montagevorrichtungen (18, 20) jeweils eine Einrichtung zum Trennen der bereitgestellten zweiten Bauteilkomponenten (22) von ihrem Haltestreifen (24; 24a, 24b) zugeordnet ist.

**11.** Vorrichtung zur Herstellung von Bauteilen aus jeweils wenigstens zwei Bauteilkomponenten in Serienfertigung nach einem der Ansprüche 8 bis 10, **dadurch gekennzeichnet, dass** der Haltestreifen (24a, 24b), vorzugsweise in einer Ausführung als Stanzstreifen, eine Längsteilung in der Weise aufweist, dass er zwei gesonderte, in Streifenlängsrichtung verlaufende Randsaumstreifenabschnitte hat, deren Abstand quer zur Streifenlängsrichtung im Wesentlichen konstant ist und deren jeder einen Haltestreifenrandabschnitt (24a, 24b) bildet, von dem jeweilige zweite Bauteilkomponenten (22) in Streifenlängsrichtung aufeinanderfolgend mit Freiräumen dazwischen quer zur Streifenlängsrichtung abstehen, derart, dass die zweiten Bauteilkomponenten des einen Haltestreifens (24a) in die Freiräume der Bauteilkomponenten des anderen Haltestreifens (24b) hineinragen.

**12.** Vorrichtung zur Herstellung von Bauteilen aus jeweils wenigstens zwei Bauteilkomponenten in Serienfertigung nach einem der vorhergehenden Ansprüche, wobei der ersten Transporteinrichtung (2) wenigstens eine Übergabevorrichtung (14, 15; 14a, 15a, 14b, 15b) zugeordnet ist, die dazu eingerichtet ist, erste Bauteilkomponenten (12) den Werkstückträgerabschnitten (6) der ersten Transporteinrichtung (2) zuzuführen, so dass jeder Werkstückträgerabschnitt (6) eine mittels der ersten Transporteinrichtung (2) zu den Montagevorrichtungen (18, 20) zu transportierende jeweilige Anzahl an ersten Bauteilkomponenten (12) erhält.

**13.** Vorrichtung zur Herstellung von Bauteilen aus jeweils wenigstens zwei Bauteilkomponenten in Serienfertigung nach einem der vorhergehenden Ansprüche, wobei der ersten Transporteinrichtung (2) wenigstens eine Ausbringvorrichtung (43, 44) zugeordnet ist, die dazu eingerichtet ist, fertige Bauteile (40) aus den Werkstückträgerabschnitten (6) der ersten Transporteinrichtung (2) auszubringen.

**Claims**

**1.** Device for producing components (40) from at least two component parts (12, 22) in serial production, comprising

- a certain number n>1 of assembly devices (18, 20) for fitting together first component parts (12) and second component parts (22) so as to form components (40),
- a first transport means (2) which is designed to transport first component parts (12) to the assembly devices (18, 20) along a first transport path (8), designed as a closed, continuous path, such that, at certain successive provision times of the first transport means (2), at least one first component part (12) is made available to all of the assembly devices (18, 20) so as to be substantially simultaneously received and/or processed by the assembly devices (18, 20),
- a second transport means (30-32) which is designed to transport second component parts (22) to the assembly devices (18, 20) in such a way that, at the provision times of the first transport means (2), a particular number of second component parts (22) are made available to the assembly devices (18, 20), which number meets in each case the need for second component parts (22) for being fitted together with the first component parts (12) at the assembly devices (18, 20),

the first transport means (2) comprising workpiece carrier portions (6) that are arranged successively at approximately equidistant points along the first transport path (8), and being designed to move said portions in a circulating manner along the first transport path (8), the workpiece carrier portions (6) being individually designed to each hold a particular first component part (12), or optionally a particular group of first component parts (12), for the transport thereof, and to move said component part or group of component parts along the first transport path (8) according to the transport movement of the first transport means (2), the distances between the positions of the assembly devices (18, 20) along the first transport path (8), at least in a certain stretch of the first transport path (8), corresponding to the distance (x) between similar locations, preferably the centres of two successive workpiece carrier portions (6), along the first transport path (8), or to an integral multiple thereof,

**characterised in that** the first transport means (2) is designed to continuously advance the workpiece carrier portions (6) along the first transport path (8) at a feed speed (V), the feed speed (V) and the distances (D) between the positions of the assembly devices (18, 20) along the first transport path (8) being matched to one another such that, during operation of the first transport means (2), at least after a start-up phase, one particular workpiece carrier portion (6) is made available to all of the assembly devices (18, 20) at the provision times of the first transport means (2) such that, when the first transport means (2) is circulating, the workpiece carrier portions (6) are each provided, in series, to a relevant assembly device (18, 20) at a particular provision time, with no workpiece carrier portion (6) being provided to more than one assembly device (18, 20).

2. Device for producing components (40) from at least two component parts (12, 22) in serial production, comprising

- a certain number n>1 of assembly devices (18, 20) for fitting together first component parts (12) and second component parts (22) so as to form components (40),
- a first transport means (2) which is designed to transport first component parts (12) to the assembly devices (18, 20) along a first transport path (8), designed as a closed, continuous path, such that, at certain successive provision times of the first transport means (2), at least one first component part (12) is made available to all of the assembly devices (18, 20) so as to be substantially simultaneously received and/or processed by the assembly devices (18, 20),
- a second transport means (30-32) which is designed to transport second component parts (22) to the assembly devices (18, 20) in such a way that, at the provision times of the first transport means (2), a particular number of second component parts (22) are made available to the assembly devices (18, 20), which number meets in each case the need for second component parts (22) for being fitted together with the first component parts (12) at the assembly devices (18, 20),

the first transport means (2) comprising workpiece carrier portions (6) that are arranged successively at approximately equidistant points along the first transport path (8), and being designed to move said portions in a circulating manner along the first transport path (8), the workpiece carrier portions (6) being individually designed to each hold a particular first component part (12), or optionally a particular group of first component parts (12), for the transport thereof, and to move said component part or group of component parts along the first transport path (8) according to the transport movement of the first transport means (2), the distances between the positions of the assembly devices (18, 20) along the first transport path (8), at least in a certain stretch of the first transport path (8), corresponding to the distance (x) between similar locations, preferably the centres of two successive workpiece carrier portions (6), along the first transport path (8), or to an integral multiple thereof, the first transport means (2) being designed to move the workpiece carrier portions (6) along the first transport path (8) intermittently, in cycles, in a specified increment (S),

**characterised in that** the distances (D) between the positions of the assembly devices (18, 20) along the first transport path (8) are matched to one another such that, during operation of the first transport means (2), at least after a start-up phase, one particular workpiece carrier portion (6) is made available to all of the assembly devices (18, 20) within the stop times of the intermittent transport movement that correspond to the provision times of the first transport means (2) such that, when the first transport means (2) is circulating, the workpiece carrier portions (6) are each provided, in series, to a relevant assembly device (18, 20) within a particular stop time of the intermittent transport movement, with no workpiece carrier portion (6) being provided to more than one assembly device (18, 20).

3. Device for producing components from at least two component parts in serial production according to either claim 1 or claim 2, **characterised in that** the first transport means (2) is designed to transport first component parts (12) to the assembly devices (18, 20) in groups such that, at the provision times of the first transport means (2), one particular group of first component parts (12) is made available to each of the assembly devices (18, 20) so as to be substantially simultaneously processed by the assembly devices (18, 20).

4. Device for producing components from at least two component parts in serial production according to claim 1 or claim 3 in combination with claim 1, **characterised in that** the provision times of the first transport means (2) successively follow one another periodically at a time interval $\Delta t$, the first transport means (2) being designed to continuously move the workpiece carrier portions (6) along the first transport path (2) at a preferably constant feed speed V which corresponds substantially to n times the distance x between similar locations, preferably the centres of two successive workpiece carrier portions (6), along the first transport path (8) divided by the time interval $\Delta t$ between two successive provision times, i.e.:
$V = nx / \Delta t$, such that, during the time interval $\Delta t$, groups of n successive workpiece carrier portions (6) are moved in the transport direction by a distance $S = n x$, where n is the number of assembly devices.

5. Device for producing components from at least two component parts in serial production according to claim 2 or claim 3 in combination with claim 2, **char-**

acterised in that the increment S of the intermittent transport movement of the first transport means (2) substantially corresponds to n times the distance x between similar locations, preferably the centres of two successive workpiece carrier portions (6), along the first transport path (8) such that, in each step, groups of n successive workpiece carrier portions (6) are moved in the transport direction by a distance S = n x, where n is the number of assembly devices.

6. Device for producing components from at least two component parts in serial production according to any of the preceding claims, **characterised in that** two assembly devices (18, 20) are provided such that the distance (D) between the positions of the two assembly devices (18, 20) along the first transport path (8) corresponds to the distance x between similar locations, preferably the centres of two successive workpiece carrier portions (6), along the first transport path (8), or to an odd multiple thereof.

7. Device for producing components from at least two component parts in serial production according to any of the preceding claims, **characterised in that** the first transport path (8) has at least one linear portion (16), and **in that** the assembly devices (18, 20) are positioned on the at least one linear portion (16) of the first transport path (8).

8. Device for producing components from at least two component parts in serial production according to any of the preceding claims, **characterised in that** the second transport means (30-32) is designed to move second component parts (22) on a holding strip (24; 24a, 24b) associated with said component parts such that, at the provision times of the first transport means (2), a particular number of second component parts (22) is always made available to the assembly devices (18, 20), which number meets in each case the need for second component parts (22) for being fitted together with the first component parts (12) at the assembly devices (18, 20).

9. Device for producing components from at least two component parts in serial production according to claim 8, **characterised in that** the holding strip (24; 24a, 24b) together with the second component parts (22) arranged thereon is a stamped strip in which the holding strip (24; 24a, 24b) and the second component parts (22) are integrally bonded together.

10. Device for producing components from at least two component parts in serial production according to any of claims 8 to 9, **characterised in that** the individual assembly devices (18, 20) are each assigned a means for separating the provided second component parts (22) from the holding strip (24; 24a, 24b) thereof.

11. Device for producing components from at least two component parts in serial production according to any of claims 8 to 10, **characterised in that** the holding strip (24a, 24b), preferably in the form of a stamped strip, is longitudinally divided such that it has two separate rim strip portions that extend in the longitudinal direction of the strip, the distance between which portions is substantially constant transversely to the longitudinal direction of the strip and each of which portions forms a holding strip edge portion (24a, 24b) from which respective second component parts (22) project transversely to the longitudinal direction of the strip successively in the longitudinal direction of the strip with free spaces therebetween, such that the second component parts of one holding strip (24a) protrude into the free spaces of the component parts of the other holding strip (24b).

12. Device for producing components from at least two component parts in serial production according to any of the preceding claims, wherein the first transport means (2) is assigned at least one transfer device (14, 15; 14a, 15a, 14b, 15b) which is designed to supply first component parts (12) to the workpiece carrier portions (6) of the first transport means (2) such that each workpiece carrier portion (6) receives a particular number of first component parts (12) to be transported to the assembly devices (18, 20) by means of the first transport means (2).

13. Device for producing components from at least two component parts in serial production according to any of the preceding claims, wherein the first transport means (2) is assigned at least one release device (43, 44) which is designed to release finished components (40) from the workpiece carrier portions (6) of the first transport means (2).

**Revendications**

1. Dispositif pour la fabrication de modules (40) à partir d'au moins deux composants de module (12, 22) respectifs en série, comprenant

   - un nombre prédéterminé n>1 de dispositifs de montage (18, 20) pour assembler des premiers composants de module (12) et des deuxièmes composants de module (22) en modules (40),
   - un premier dispositif de transport (2), adapté pour transporter des premiers composants de module (12) vers les dispositifs de montage (18, 20), le long d'une première section de transport (8) adaptée comme trajet sans fin fermé, de telle sorte qu'à tous les dispositifs de montage (18, 20), à des moments de mise à disposition successifs déterminés du premier dispositif de transport (2), au moins un premier composant de module (12) soit disponible pour une prise en contrôle essentiellement simultanée ou/et un traitement par les dispositifs de montage (18, 20),

- un deuxième dispositif de transport (30 - 32), adapté pour transporter des deuxièmes composants de module (22) vers les dispositifs de montage (18, 20), de telle sorte qu'à des moments de mise à disposition du premier dispositif de transport (2) un nombre respectif de deuxièmes composants de module (22) soit disponible aux dispositifs de montage (18, 20) correspondant au besoin de deuxièmes composants de module (22) pour l'assemblage avec les premiers composants de module (12) aux dispositifs de montage (18, 20),

dans lequel le premier dispositif de transport (2) comprend le long du premier trajet de transport (8) des sections porte-pièces (6) se succédant de manière au moins approximativement équidistante et est adapté pour les déplacer en circulation le long du premier trajet de transport (8), dans lequel les sections porte-pièces (6) sont adaptées individuellement pour transporter un premier composant de module (12) ou, au choix, un groupe respectif de premiers composant de module (12) pour le transport et pour les déplacer le long du premier trajet de transport (8) en fonction du mouvement de transport du premier dispositif de transport (2), dans lequel, au moins dans une certaine section du premier trajet de transport (8) les distances entre les positions des dispositifs de montage (18, 20) le long du premier trajet de transport (8) correspondent à la distance (x) entre des points similaires, de préférence des centres de deux sections porte-pièces (6) se succédant le long du premier trajet de transport (8) ou à un multiple entier de celle-ci,

**caractérisé en ce que** le premier dispositif de transport (2) est adapté pour faire avancer en continu les sections porte-pièces (6) avec une vitesse d'avance (V) le long du premier trajet de transport (8), la vitesse d'avance (V) et les distances (D) entre les positions des dispositifs de montage (18, 20) le long du premier trajet de transport (8) étant adaptées les unes aux autres de telle sorte que, pendant le fonctionnement du premier dispositif de transport (2) - au moins après une phase de démarrage - une section porte-pièce (6) respective est mise à disposition à tous les dispositifs de montage (18, 20) aux moments de mise à disposition du premier dispositif de transport (2) de telle sorte que, lors d'une circulation du premier dispositif de transport (2), chacune des sections porte-pièce (6) est mise à disposition en série à un moment de mise à disposition respectif à un dispositif de montage (20, 20) respectif concerné, aucune section porte-pièce (6) n'étant prévue à plus d'un dispositif de montage (18, 20).

2. Dispositif pour la fabrication de modules (40) à partir d'au moins deux composants de module (12, 22) respectifs, en série, comprenant

- un nombre déterminé n>1 de dispositifs de montage (18, 20) pour assembler des premiers composants de module (12) et des deuxièmes composants de module (22) en modules (40),
- un premier dispositif de transport (2) adapté pour transporter des premiers composants de module (12) vers les dispositifs de montage (18, 20) le long d'un premier trajet de transport (8) adapté comme trajet sans fin fermé, de telle sorte qu'un premier composant de module (12) respectif est prévu à tous les dispositifs de montage (18, 20) à des moments de mise à disposition successifs déterminés du premier dispositif de transport (2) pour un transfert et/ou un traitement essentiellement simultané par les dispositifs de montage (18, 20),
- un deuxième dispositif de transport (30 - 32) qui est adapté pour transporter des deuxièmes composants de module (22) vers les dispositifs de montage (18, 20) de telle sorte qu'un certain nombre de deuxièmes composants de module (22) respectif est prévu aux dispositifs de montage (18, 20) aux moments de mise à disposition du premier dispositif de transport (2), correspondant au besoin respectif de deuxièmes composants de module (22) pour l'assemblage avec les premiers composants de module (12) aux dispositifs de montage (18, 20),

dans lequel le premier dispositif de transport (2) comprend le long du premier trajet de transport (8) des sections porte-pièces (6) se succédant de manière au moins approximativement équidistante et est adapté pour les déplacer en circulation le long du premier trajet de transport (8), dans lequel les sections porte-pièces (6) sont adaptées individuellement pour transporter un premier composant de module (12) ou, au choix, un groupe respectif de premiers composant de module (12) pour le transport et pour les déplacer le long du premier trajet de transport (8) en fonction du mouvement de transport du premier dispositif de transport (2), dans lequel, au moins dans une certaine section du premier trajet de transport (8) les distances entre les positions des dispositifs de montage (18, 20) le long du premier trajet de transport (8) correspondent à la distance (x) entre des points similaires, de préférence aux centres de deux sections porte-pièces (6) se succédant le long du premier trajet de transport (8) ou à un multiple entier de celle-ci,

dans lequel le premier dispositif de transport (2) est adapté pour avancer les sections porte-pièces (6) de manière intermittente avec une taille de pas donnée (S) le long du premier trajet de transport (8),

**caractérisé en ce que** les distances (D) entre les positions des dispositifs de montage (18, 20) le long du premier trajet de transport (8) sont alignés de telle sorte que pendant le fonctionnement du premier dispositif de transport (2) - au moins après une phase de démarrage - une section porte-pièce (6) respective est mise à disposition à tous les dispositifs de montage (18, 20) à des moments d'arrêt du mouvement de transport intermittent correspondant aux moments de mise à disposition du premier dispositif de transport (2) de telle sorte que, lors d'une circulation du premier dispositif de transport (2), chacune des sections porte-pièce (6) est mise à disposition en série à un moment d'arrêt du mouvement de transport intermittent à un dispositif de montage (18, 20) respectif concerné, aucune section porte-pièce (6) n'étant prévue à plus d'un dispositif de montage (18, 20).

3. Dispositif pour la fabrication de modules à partir d'au moins deux composants de module respectifs, en série selon la revendication 1 ou 2, **caractérisé en ce que** le premier dispositif de transport (2) est adapté pour transporter des premiers composants de module (12) par groupes vers les dispositifs de montage (18, 20) de telle sorte qu'aux moments de mise à disposition du premier dispositif de transport (2), un groupe respectif de premiers composants de module (12) est prévu à chacun des dispositifs de montage (18, 20) pour un traitement sensiblement simultané par les dispositifs de montage (18, 20).

4. Dispositif pour la fabrication de modules à partir d'au moins deux composants de module respectifs, en série selon la revendication 1 ou la revendication 3 en combinaison avec la revendication 1, **caractérisé en ce que** les moments de mise à disposition du premier dispositif de transport (2) se succèdent périodiquement avec un intervalle de temps $\Delta t$, dans lequel le premier dispositif de transport (2) est adapté pour faire avancer en continu les sections porte-pièces (6) le long du premier trajet de transport (2) à une vitesse d'avance V, de préférence constante, qui correspond sensiblement à n fois la distance x entre des points similaires, de préférence les centres de deux sections porte-pièces (6) successives le long du premier trajet de transport (8), divisée par l'intervalle de temps $\Delta t$ entre deux moments de mise à disposition successifs, c'est-à-dire

$$V = nx/\Delta t$$

de telle sorte que pendant l'intervalle de temps $\Delta t$, des groupes de n sections porte-pièces (6) successives sont avancés dans la direction de transport d'une distance S = n x, où n est le nombre de dispositifs de montage.

5. Dispositif pour la fabrication de modules à partir d'au moins deux composants de module respectifs, en série selon la revendication 2 ou la revendication 3 en combinaison avec la revendication 2, **caractérisé en ce que** la taille de pas S du mouvement de transport intermittent du premier dispositif de transport (2) correspond sensiblement à n fois la distance x entre des points similaires, de préférence les centres de deux sections porte-pièce (6) successives le long du premier trajet de transport (8), de telle sorte que pendant chaque pas, des groupes de n sections porte-pièces (6) successives sont avancés d'une distance S = n x dans la direction de transport, où n est le nombre de dispositifs de montage.

6. Dispositif pour la fabrication de modules à partir d'au moins deux composants de module respectifs, en série selon l'une des revendications précédentes, **caractérisé en ce que** deux dispositifs de montage (18, 20) sont prévus de telle sorte que la distance (D) entre les positions des deux dispositifs de montage (18, 20) le long du premier trajet de transport (8) correspond à la distance x entre des points similaires, de préférence les centres de deux sections porte-pièces (6) successives le long du premier trajet de transport (8) ou à un multiple impair de celle-ci.

7. Dispositif pour la fabrication de modules à partir d'au moins deux composants de module respectifs, en série selon l'une des revendications précédentes, **caractérisé en ce que** le premier trajet de transport (8) présente au moins une section linéaire (16) et que les dispositifs de montage (18, 20) sont positionnés sur ladite au moins une section linéaire (16) du premier trajet de transport (8).

8. Dispositif pour la fabrication de modules à partir d'au moins deux composants de module respectifs, en série selon l'une des revendications précédentes, **caractérisé en ce que** le deuxième dispositif de transport (30 - 32) est adapté pour transporter les deuxièmes composants de module (22) sur une bande de support (24 ; 24a, 24b) associée à ceux-ci, de telle sorte qu'aux moments de mise à disposition du premier dispositif de transport (2) aux dispositifs de montage (18, 20), il y a toujours un nombre respectif de deuxièmes composants de module (22) disponibles, correspondant au besoin en deuxièmes composants (22) pour l'assemblage avec les premiers composants de module (12) sur les dispositifs de montage (18, 20) dans chaque cas.

9. Dispositif pour la fabrication de modules à partir d'au moins deux composants de module respectifs, en série selon la revendication 8, **caractérisé en ce que** la bande de support (24 ; 24a, 24b) et les deuxièmes composants de module (22) qui y sont disposés sont une bande découpée dans laquelle la bande de support (24 ; 24a, 24b) et les deuxièmes composants de module (22) sont assemblés de manière à présenter une cohésion matérielle.

10. Dispositif pour la fabrication de modules à partir d'au moins deux composants de module respectifs, en série selon l'une des revendications 8 à 9, **caractérisé en ce qu'**aux différents dispositifs de montage (18, 30, 20) est associé respectivement un dispositif pour séparer les seconds composants de composants (22) prévus de leur bande de support (24 ; 24a, 24b).

11. Dispositif pour la fabrication de modules à partir d'au moins deux composants de module respectifs, en série selon l'une des revendications 8 à 10, **caractérisé en ce que** la bande de support (24a, 24b), de préférence dans une version sous forme de bande découpée, présente une division longitudinale de telle sorte qu'elle présente deux sections de bande de couture de bord séparées s'étendant dans le sens longitudinal de la bande, dont la distance est sensiblement constante transversalement à la direction longitudinale de la bande et dont chacune forme une partie de bord de bande de support (24a, 24b) à partir de laquelle des deuxièmes composants de module (22) respectifs font successivement saillie dans la direction longitudinale de la bande avec des espaces libres entre elles transversalement à la direction longitudinale de la bande, de telle sorte que les deuxièmes composants de module (22) d'une bande de support (24a) font saillie dans les espaces libres des composants de module de l'autre bande de support (24b).

12. Dispositif pour la fabrication de modules à partir d'au moins deux composants de module respectifs, en série selon l'une des revendications précédentes, dans lequel au moins un dispositif de transfert (14, 15 ; 14a, 15a, 14b, 15b) est associé au premier dispositif de transport (2), adapté pour amener des premiers composants de module (12) aux sections porte-pièces (6) du premier dispositif de transport (2), de telle sorte que chaque section porte-pièces (6) reçoit un nombre respectif de premiers composants de module (12) à transporter au moyen du premier dispositif de transport (2) vers les dispositifs de montage (18, 20).

13. Dispositif pour la fabrication de modules à partir d'au moins deux composants de module respectifs, en série selon l'une des revendications précédentes, dans lequel au moins un dispositif de déchargement (43, 44) est associé au premier dispositif de transport (2) adapté pour décharger des composants finis (40) des sections de porte-pièces (6) du premier dispositif de transport (2).

Fig. 1

Fig. 2

EP 3 258 552 B1

Fig. 3a

Fig. 3b

Fig. 3c

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 3561114 A